# EUROPÄISCHE PATENTSCHRIFT

(11) **EP 0 785 049 B1**
(45) Veröffentlichungstag und Bekanntmachung des Hinweises auf die Patenterteilung: **03.11.2004**
(21) Anmeldenummer: 96100474.4
(22) Anmeldetag: 15.01.1996
(51) Int. Cl.: B25B 5/06, F16B 2/04

(54) **Auflagetisch mit einer Spannvorrichtung**
Support table with clamping device
Table de support avec dispositif de serrage

(43) Veröffentlichungstag der Anmeldung: 23.07.1997
(73) Patentinhaber: Cianci, Pasquale, Dipl.-Ing, 73252 Lenningen (DE); AMF Andreas Maier GmbH & Co., 70734 Fellbach (DE)
(72) Erfinder: Cianci, Pasquale, Dipl.-Ing., D-73252 Lenningen (DE)
(74) Vertreter: Rüger, Barthelt & Abel Patentanwälte

(56) Entgegenhaltungen:
- EP-A- 0 322 617
- EP-A- 0 533 083
- DE-A- 3 009 423
- DE-A- 4 020 981
- DE-U- 29 500 115
- US-A- 4 174 828
- US-A- 4 880 218

## Beschreibung

Die Erfindung betrifft einen Auflagetisch mit wenigstens einer Spannvorrichtung zum Spannen von zu bearbeitenden Werkstücken.

Aus der DE-C-40 20 981, die als nöchstliegender Stand der Technik angesehen wird, ist eine Spannvorrichtung bekannt, die ein beispielsweise auf einem Werktisch aufzusetzendes Gehäuse aufweist. In dem Gehäuse ist ein Hydraulikzylinder untergebracht, dessen Kolbenstange nach oben aus dem Gehäuse herausragt. Das obere Ende der Kolbenstange, das als Kegel ausgebildet ist, umgibt eine mit einem Sägezahnprofil versehene Spannhülse, die sich innerhalb des Gehäuses auf einem Federpaket abstützt.

Zum Spannen eines Werkstücks wird dieses mit einer entsprechenden Spannbohrung auf die Spannhülse gesteckt und der Hydraulikzylinder im Inneren der Spannvorrichtung in Gang gesetzt. Hierdurch wird die Kolbenstange in das Gehäuse gezogen. Bei dieser Bewegung bewegt sich der Spreizkegel relativ zur Spannhülse und treibt diese auseinander, radial gegen die Wände der Spannbohrung im Werkstück. Durch die weitere Betätigung des Hydraulikzylinders wird die im Werkstück verklemmte Spannhülse in Richtung auf das Gehäuse der Spannvorrichtung vorgespannt und zieht so das Werkstück auf die Spannvorrichtung nieder.

Der mögliche Hub, den die Spannhülse in dem Gehäuse der Spannvorrichtung hat, ist kleiner als der aus dem Gehäuse der Spannvorrichtung herausschauende Abschnitt der Spannhülse.

Um mit der bekannten Vorrichtung ein Werkstück aufsetzen und spannen zu können, muss das Werkstück von oben her hinreichend genau auf die vorstehende Spannhülse aufgesteckt werden.

Die EP-A-0 322 617 zeigt eine Haltevorrichtung zum Festsetzen eines gelochten Werkstückes. Die Haltevorrichtung setzt sich aus einer Hebevorrichtung und der eigentlichen Spannvorrichtung zusammen, die mittels der Hebevorrichtung zu bewegen ist.

Die Hebevorrichtung besteht aus einem unterhalb des Werktisches angeordneten Gehäuse, dessen von dem Werktisch abliegendes Ende als Arbeitszylinder ausgebildet ist. In dem Arbeitszylinder ist ein druckluftbetätigter Kolben untergebracht, von dem eine Kolbenstange ausgeht, der in Richtung auf die Spanneinrichtung ragt. Mittels einer Feder wird die Kolbenstange ausgetrieben, während die Druckluft entgegen der Wirkung der Feder arbeitet.

Mit Hilfe dieser Kolbenstange der Hebevorrichtung wird die eigentliche Spannvorrichtung in dem Gehäuse der Hebevorrichtung bewegt. Die Spannvorrichtung besteht ihrerseits aus einem Gehäuse mit darin untergebrachtem Arbeitszylinder, der jedoch nicht mit Druckluft, sondern mit einem Hydrauliköl arbeitet. Der Kolben dieses Arbeitszylinders trägt eine Kolbenstange und wird mittels einer Feder in die Stellung mit ausgetriebener Kolbenstange vorgespannt. Das freie Ende der Kolbenstange trägt einen aufwendigen Nockenmechanismus mit Spreizring.

Beim Spannen mit dieser Haltevorrichtung wird zunächst der Hydraulikzylinder der Spanneinrichtung drucklos gemacht, so dass die Kolbenstange der Haltevorrichtung maximal ausgetrieben ist und der Haltenocken seine entspannte Lage einnehmen kann. Anschließend wird der Druckluftzylinder unter Druck gesetzt, wodurch die Kolbenstange der Hebevorrichtung eingezogen wird und die Spannvorrichtung sich in dem Gehäuse der Hebevorrichtung nach unten absenken kann. Dabei verschwindet die Kolbenstange der Spannvorrichtung unter der Tischfläche. Das Werkstück lässt sich jetzt positionieren und sobald die Druckluft aus dem Druckluftzylinder der Hebevorrichtung abgelassen wird, hebt die darin befindliche Feder die Spannvorrichtung an, bis deren Gehäuse an der Unterseite des Werktisches anstößt. Dabei passiert die Kolbenstange der Spannvorrichtung mit dem Klemmnocken die Bohrung im Werkstück. Anschließend kann der Hydraulikzylinder der Spannvorrichtung unter Druck gesetzt werden, damit er die Kolbenstange der Spannvorrichtung gegen die Wirkung der Vorspannfeder in das Gehäuse zurückzieht, wobei der Klemmnocken am freien Ende der Kolbenstange gespreizt wird, um das Werkstück gegen den Werktisch festzuspannen. Hierbei legt sich das Gehäuse der Spannvorrichtung fest an der Unterseite des Werktisches an.

Aufgabe der vorliegenden Erfindung ist daher die Schaffung eines Auflagetisches mit Spannvorrichtungen der eingangs genannten Art, auf den sich das Werkstück ohne wesentlichen Kraftaufwand und ohne wesentliche Zeitverzögerung auf die Auflagefläche auflegen lässt.

Diese Aufgabe wird erfindungsgemäß durch die im Anspruch 1 angegebenen Merkmale gelöst.

Durch versenkte Spannvorrichtungen die die Auflagefläche nicht mehr überragen, ist es möglich, auf einfache und bequeme Weise das Werkstück seitlich auf die Auflagefläche aufzuschieben. Dabei können in der Auflagefläche federnde Rollkugeln angebracht sein, die die Verschiebung des Werkstücks begünstigen. Gemäß der Erfindung sind der Hubkolben und der Spannkolben der Spannvorrichtungen des Auflogetisches über ein gemeinsames Druckmedium angetrieben.

Durch in den Unteransprüchen gekennzeichnete Anschlagstifte, die zunächst die Auflagefläche überragen, lässt sich das Werkstück in der gewünschten Lage positionieren, so daß die Spannhülsen in die entsprechenden Bohrungen einfahren können und das Werkstück sicher festhalten.

Die Betötigung dieses Ausführungsform erfolgt durch gleichzeitige Beaufschlagung der Kolben mit einer Hydraulikflüssigkeit, die durch eine einzige Zuführleitung den Zylindern zugeführt wird. Damit erfolgt ein selbsttätiger Funktionsablauf, bei der in logischer Folge das Werkstück fest gespannt und die Anschlagstifte versenkt werden. Damit ist eine fünfseitige Bearbeitung des Werkstücks möglich.

Zur Abnahme des Werkstücks vom Auflagetisch wird der Druck der Hydraulikflüssigkeit aufgehoben und der Funktionsablauf erfolgt wieder selbsttätig in umgekehrter Reihenfolge.

Im folgenden ist ein Ausführungsbeispiel der Erfindung unter Bezugnahme auf die Zeichnungen näher beschrieben.

Es zeigen:
Fig. 1 Auflagetisch, von oben
Fig. 2 Schnitt nach Linie II - II in Fig. 1

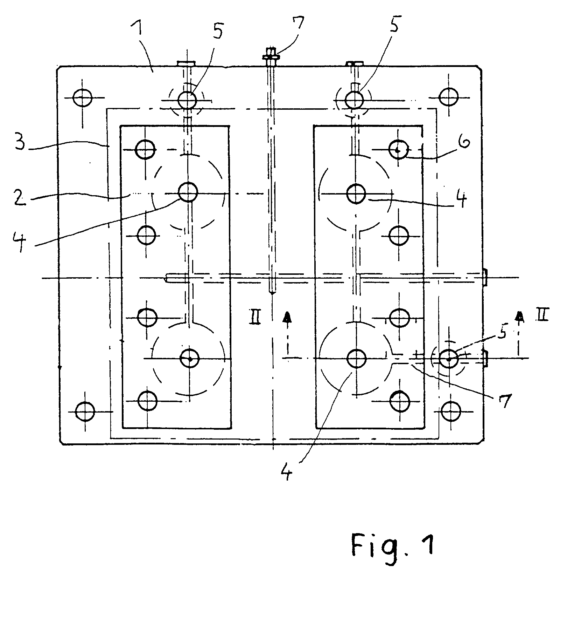

Fig. 1 zeigt einen Auflagetisch 1 mit einer Auflagefläche 2 für ein Werkstück 3, das durch Spannvorrichtungen 4 an der Auflagefläche 2 festspannbar ist.

Zum Positionieren von Werkstück 3 dienen versenkbare Anschlagstifte 5, zum bequemen Verschieben des Werkstücks sind Rollkugeln 6 vorgesehen.

Zur Zuführung der Hydraulikflüssigkeit dient eine einzige Zuführleitung 7.

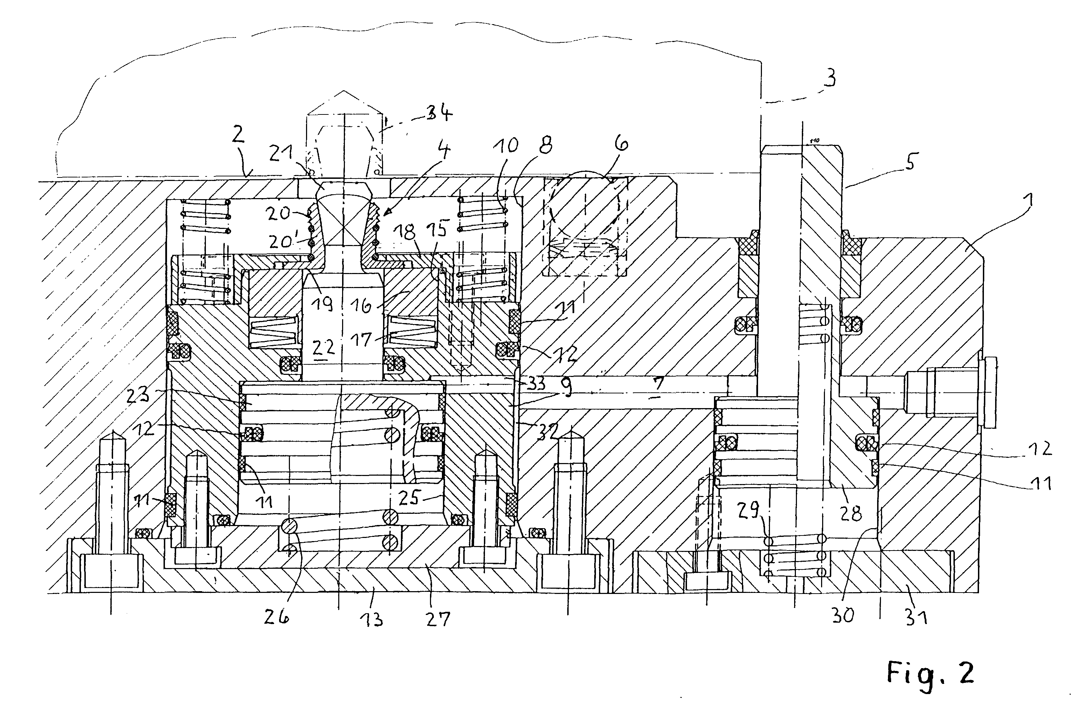

Wie Fig. 2 zeigt, ist im Auflagetisch 1 senkrecht zur Auflagefläche 2 eine Zylinderbohrung 8 vorgesehen, in der ein Hubkolben 9 gegen Wirkung einer Feder 10 verschiebbar gelagert ist. Zur Führung von Hubkolben 9 dienen Führungsringe 11, die an ihrem Umfang nicht dargestellte achsiale Schlitze aufweisen, so daß die Hydraulikflüssigkeit hindurchtreten kann. Außerdem ist der Hubkolben 9 mit einem Dichtring 12 versehen.

Die Zylinderbohrung 8 ist an ihrem unteren Ende durch einen Deckel 13 verschlossen, der mit dem Auflagetisch 1 dicht verschraubt ist.

Der Hubkolben 9 weist an seinem oberen Ende eine Sacklochbohrung 15 auf, in der ein Auflagering 16 und eine Tellerfeder 17 gelagert ist.

Mit dem oberen Ende von Hubkolben 9 ist eine Klemmplatte 18 verschraubt, die die Sacklochbohrung 15 teilweise abdeckt und außerdem einen Flansch 19 einer Spannhülse 20 übergreift, so daß diese, auf dem Auflagering 16 aufliegend, sicher mit dem Hubkolben 9 verbunden ist.

Mit der Spannhülse 20, die sich in Ruhestellung unter der Auflagefläche 2 befindet, wirkt der Spannkopf 21 zusammen, der über eine Zugstange 22 mit einem Spannkolben 23 verbunden ist. Spannhülse 20 und Spannkopf 21 bilden die Spannvorrichtung 4.

Der Spannkolben 23 ist in einer Zylinderbohrung 25 von Hubkolben 9 gegen Wirkung einer Feder 26 verschiebbar gelagert. Er wird wieder von Führungsringen 11 geführt und gegen die beaufschlagte Seite durch einen Dichtring 12 abgedichtet. Die Zylinderbohrung 25 ist an ihrer offenen Seite durch einen Deckel 27 verschlossen, der mit dem Hubkolben 9 dicht verschraubt ist.

Wie Fig. 2 weiter zeigt, überragen die Anschlagstifte 5 in Ruhestellung die Auflagefläche 2 und sind mit einem Anschlagkolben 28 verbunden, der gegen Wirkung einer Feder 29 in einer Zylinderbohrung 30 von Auflagetisch 1 verschiebbar gelagert ist. Die Führung von Anschlagkolben 28 erfolgt wieder durch Führungsringe 11, die Abdichtung durch einen Dichtring 12. Die Zylinderbohrung 30 ist an ihrem Ende durch einen Deckel 31 verschlossen, der mit dem Auflagetisch 1 verschraubt ist.

Zur Betätigung der Kolben 9, 23, 28 ist ein Druckmedium in Form von einer Hydraulikflüssigkeit vorgesehen, die dem Auflagetisch 1 über die Zuführleitung 7 zugeführt wird. Diese Zuführleitung 7 setzt sich, wie Fig. 2 zeigt, zunächst über die Zylinderbohrung 30 fort, wo der Anschlagkolben 28 von oben beaufschlagbar ist. Des weiteren mündet sie in einer Ringnut 32 von Hubkolben 9, von wo sie einmal über eine Radialbohrung 33 im Hubkolben 9 in die Zylinderbohrung 25 über den Spannkolben 23 und zum andern durch nicht dargestellte Schlitze im Führungsring 11 unter den Hubkolben 9 gelangen kann. Damit werden Hubkolben 9, Spannkolben 23 und Anschlagkolben 28 über die gleiche Zuführleitung 7 beaufschlagt.

Zur Beschreibung der Funktion sei von der in Fig. 2 gezeigten Stellung ausgegangen, wobei die Spannvorrichtung 4 im Auflagetisch 1 unterhalb der Auflagefläche 2 versenkt ist und wobei die Anschlagstifte 5 die Auflagefläche 2 überragen. Das Werkstück 3 lässt sich jetzt bequem über die gefederten Rollkugeln 6 auf den Auflagetisch 1 schieben und durch die Anschlagstifte 5 positionieren.

Die Durchmesser der Kolben 9, 23 und 28 und die Federn 10, 26 und 29 sind nun so aufeinander abgestimmt, daß zunächst die Hubkolben 9 die ungespreizten Spannhülsen 20 über die Autlagefläche 2 anheben, so daß diese in die Spannbohrungen 34 im Werkstück 3 eintauchen. (Fig. 2, strichpunktiert)

Nach Erreichen der oberen Anschlagstellung des Hubkolbens 9 erhöht sich der hydraulische Druck in der Zuführleitung 7 und der Spannkolben 23 bewegt sich nach unten, wobei der Spannkopf 21 die Spannsegmente 20' der Spannhülse 20 spreizt, so daß diese sich in der Spannbohrung 34 von Werkstück 3 festkrallen.

Dabei erfolgt eine weitere Erhöhung des hydraulischen Drucks, was zur Folge hat, daß der Anschlagkolben 28 nach unten verschoben wird und dabei die Anschlagstifte 5 unter die Auflagefläche 2 versenkt.

Eine weitere Steigerung des hydraulischen Drucks bewirkt nun, daß die Spannvorrichtung 4 das Werkstück 3 gegen Wirkung der Tellerfedern 17 gegen die Auflagefläche 2 zieht, wobei die Rollkugeln 6 in den Auflagetisch 1 vollständig eintauchen und wobei das Werkstück 3 sicher festgespannt wird.

Nach Entlasten des hydraulischen Drucks erfolgt der oben beschriebene Funktionsablauf in umgekehrter Reihenfolge, so daß das Werkstück 3 freigegeben wird und vom Auflagetisch 1 entnommen werden kann. Dieser ist damit bereit zur Aufnahme eines neuen Werkstücks.

## Patentansprüche

1. Auflagetisch (1) mit wenigstens einer Spannvorrichtung (4) zum Spannen von zu bearbeitenden Werkstücken (3), bei der eine Spannhülse (20) mit einer kraftbetriebenen Zugstange (22) mit einem konischen Spannkopf (21) zusammenwirkt, wobei
die Spannvorrichtung (4) unter die Auflagefläche (2) für das Werkstück (3) versenkbar im Auflagetisch (1) gelagert ist,
die Spannvorrichtung (4) in einem Hubkolben (9) angeordnet ist, der axial verschiebbar gegen Wirkung einer Feder (10) in dem Auflagetisch (1) gelagert ist,
der Hubkolben (9) und ein Spannkolben (23) für die Zugstange (22) über ein gemeinsames Druckmedium angetrieben sind und
die Durchmesserverhältnisse des Hubkolbens (9) und des Spannkolbens (23) derart aufeinander abgestimmt sind, dass bei einer Erhöhung des Drucks des Druckmediums zunächst der Hubkolben (8) und bei weiterer Druckerhöhung der Spannkolben (23) wirksam wird.

2. Auflagetisch nach Anspruch 2, **dadurch gekennzeichnet, dass** der Hubkolben (9) eine Zylinderbohrung (25) aufweist, in der der Spannkolben (23) der Zugstange (22) gegen Wirkung einer Feder (26) verschiebbar gelagert ist.

3. Auflagetisch nach einem der Ansprüche 1 bis 2, **gekennzeichnet durch** Anschlagstifte (5) für das Werkstück (3), die Unter die Auflagefläche (2) versenkbar im Auflagetisch (1) gelagert sind.

4. Auflagetisch nach Anspruch 3, **dadurch gekennzeichnet, dass** die Anschlagstifte (5) mittels eines Anschlagkolbens (28) gegen Wirkung einer Feder (29) axial verschiebbar im Auflagetisch (1) gelagert sind.

5. Auflagetisch nach Anspruch 4, **dadurch gekennzeichnet, dass** der Hubkolben (9), der Spannkolben (23) und der Anschlagkolben (28) über die gleiche Zuführleitung (7) mit dem Druckmedium beaufschlagbar sind.

6. Verfahren zum Spannen eines Werkstücks mit Spannbohrungen (34) mittels einer Spanneinrichtung nach Anspruch 5, **dadurch gekennzeichnet, dass** nach gleichzeitiger Beaufschlagung der Kolben (9, 23, 28) mit dem Druckmedium durch Ansteigen des Druckes nacheinander folgende Funktionsschritte eintreten:
der Hubkolben (9) hebt die Spannhülsen (20) über die Auflagefläche (2), so dass diese in die Spannbohrungen (34) im Werkstück (3) eintauchen,
der Spannkolben (23) spreizt über den Spannkopf (21) die Spannsegmente (35),
der Anschlagkolben (28) versenkt die Anschlagstifte (5) unter die Auflagefläche (2),
das Werkstück (3) wird durch den Spannkolben (23) gegen die Auflagefläche (2) gezogen und somit festgespannt, und dass bei der Entlastung der Kolben (9, 23, 28) durch das Druckmedium der Funktionsablauf in umgekehrter Reihenfolge erfolgt.

## Claims

1. Support table (1) with at least one clamping device (4) for clamping workpieces (3) to be machined, in which a clamping sleeve (20) cooperates with a power-driven pull rod (22) with a conical clamping head (21), wherein
the clamping device (4) is disposed to be countersunk in the support table (1) below the supporting surface (2) for the workpiece (3),
the clamping device (4) is arranged in a lifting piston (9), which is disposed in the support table (1) to be axially displaceable against the action of a spring (10),
the lifting piston (9) and a clamping piston (23) for the pull rod (22) are driven via a joint pressure medium, and
the ratios of the diameters of the lifting piston (9) and the clamping piston (23) are coordinated to one another in such a manner that with an increase in the pressure of the pressure medium the lifting piston (9) firstly becomes active and then with a further pressure increase the clamping piston (23) becomes active.

2. Support table according to Claim 1, **characterised in that** the lifting piston (9) has a cylinder bore (25), in which the clamping piston (23) of the pull rod (22) is disposed to be displaceable against the action of a spring (26).

3. Support table according to one of Claims 1 to 2, **characterised by** stop pins (5) for the workpiece (3), which are disposed to be countersunk in the support table (1) below the supporting surface (2).

4. Support table according to Claim 3, **characterised in that** the stop pins (5) are disposed in the support table (1) to be axially displaceable against the action of a spring (29) by means of an impact piston (28).

5. Support table according to Claim 4, **characterised in that** the lifting piston (9), the clamping piston (23) and the impact piston (28) can be fed with the pressure medium via the same supply line (7).

6. Process for clamping a workpiece with clamping holes (34) by means of a clamping arrangement according to Claim 5, **characterised in that** after the pressure medium has been simultaneously fed to the pistons (9, 23, 28) by raising the pressure one after the other, the following function steps occur:
the lifting piston (9) lifts the clamping sleeves (20) above the supporting surface (2) so that these penetrate into the clamping holes (34) in the workpiece (3),
the clamping piston (23) spreads the clamping segments (35) above the clamping head (21),
the impact piston (28) lowers the stop pins (5) below the supporting surface (2),
the workpiece (3) is drawn against the supporting surface (2) by the clamping piston (23) and thus firmly clamped,
and that when the pistons (9, 23, 28) are relaxed as a result of the pressure medium, the operating procedure occurs in the reversed sequence.

## Revendications

1. Table de support (1) avec, pour serrer des pièces à usiner (3), au moins un dispositif de serrage (4) qui comporte une douille de serrage (20) coopèrant par l'intermédiaire d'une tige de traction (22) avec une tête de serrage (21) conique, et dans cette table :
- le dispositif de serrage (4) est monté de manière à pouvoir être enfoncé dans la table de support (1) en dessous de la surface d'appui (2) de la pièce (3),
- le dispositif de serrage (4) est monté dans un piston de levage (9) qui est monté coulissant dans la table de support, contre l'action d'un ressort (10),
- le piston de levage (9) et un piston de serrage (23) pour la tige de traction (22) sont entraînés par un agent de pression commun,
- les rapports des diamètres du piston de levage (9) et du piston de serrage (23) sont définis de manière qu'une augmentation de la pression de l'agent de pression active d'abord le piston de levage (9) puis, la pression continuant à augmenter, le piston de serrage (23).

2. Table de support selon la revendication 1, **caractérisée en ce que** le piston de levage (9) présente un alésage cylindrique (25) dans lequel peut coulisser le piston de serrage (23) de la tige de traction (22) contre l'action d'un ressort (26).

3. Table de support selon la revendication 1 ou 2, **caractérisée en ce qu'**elle comporte des tiges de butée pour la pièce (3), qui sont montées dans la table de support de manière à pouvoir être enfoncées en dessous de la surface d'appui (2).

4. Table de support selon la revendication 3, **caractérisée en ce que** les tiges de butée (5) peuvent coulisser axialement dans la table de support (1) par l'intermédiaire d'un piston de butée (28) contre l'action d'un ressort (29).

5. Table de support selon la revendication 4, **caractérisée en ce que** le piston de levage (9), le piston de serrage (23) et le piston de butée (28) peuvent être actionnés par l'agent de pression arrivant par la même conduite d'amenée (7).

6. Procédé pour serrer une pièce équipée d'alésages de serrage (34), par l'intermédiaire d'un dispositif de serrage selon la revendication 5, **caractérisé en ce qu'**après que les pistons (9, 23, 28) aient été soumis simultanément à l'action de l'agent de pression, l'augmentation de la pression de celui-ci produit successivement les étapes fonctionnelles suivantes :
- le piston de levage (9) soulève les douilles de serrage (20) au-dessus de la surface d'appui (2), de sorte que celles-ci pénètrent dans les alésages de serrage (34) prévus dans la pièce (3),
- le cylindre de serrage (23) produit par l'intermédiaire de la tête de serrage (21), l'expansion de segments de serrage (35),
- le piston de butée (28) fait descendre les tiges de butée (5) en dessous de la surface d'appui (2),
- la pièce (5) est tirée par les pistons de serrage (23) vers la surface d'appui (2) et se trouve ainsi fixée par serrage;
- en relâchant l'action du moyen de pression sur les pistons (9, 23, 28), les étapes fonctionnelles s'effectuent dans l'ordre inverse.
